# EUROPEAN PATENT SPECIFICATION

(11) **EP 4 094 472 B1**
(45) Date of publication and mention of the grant of the patent: **22.01.2025**
(21) Application number: 21700273.2
(22) Date of filing: 08.01.2021
(51) Int. Cl.: H04W 24/04, H04W 48/02

(54) **NSA-SA CELL OPERATION**
NSA-SA-ZELLENBETRIEB
FONCTIONNEMENT DE CELLULE NSA-SA

(30) Priority: 24.01.2020 IN 202041003322
(43) Date of publication of application: 30.11.2022
(73) Proprietor: Nokia Solutions and Networks Oy, 02610 Espoo (FI)
(72) Inventor: ARJONA, Andres, Tokyo 153--0043 (JP); CHANDRASHEKAR, Subramanya, Bangalore 560079 (IN); NOWAK, Pawel Hieronim, 54-150 Wroclaw (PL)
(74) Representative: Script Intellectual Property LLP
(86) International application number: PCT/EP2021/050239
(87) International publication number: WO 2021/148257

(56) References cited:
- EP-A1- 3 606 282
- WO-A1-2018/195943
- WO-A1-2019/013597
- US-A1- 2019 059 045
- US-A1- 2019 110 244
- US-A1- 2020 275 344
- NOKIA ET AL: "Discussion on NSA-SA Cell Operation", vol. RAN WG3, no. E-Meeting; 20201102 - 20201112, 23 October 2020 (2020-10-23), XP051945993, Retrieved from the Internet <URL:https://ftp.3gpp.org/tsg_ran/WG3_Iu/TSGR3_110-e/Docs/R3-206645.zip R3-206645 Disc NSA-SA Cell Operation.doc> [retrieved on 20201023]
- HUAWEI: "(TP for NR BL CR for TS 38.473): on Cell Barred Info exchange over F1 interface", vol. RAN WG3, no. Sanya, China; 20180416 - 20180420, 15 April 2018 (2018-04-15), XP051430270, Retrieved from the Internet <URL:http://www.3gpp.org/ftp/Meetings%5F3GPP%5FSYNC/RAN3/Docs/> [retrieved on 20180415]
- ERICSSON: "NSA/SA NR cell indication in NR CGI reporting", vol. RAN WG2, no. Montreal, Canada; 20180702 - 20180706, 1 July 2018 (2018-07-01), XP051466951, Retrieved from the Internet <URL:http://www.3gpp.org/ftp/Meetings%5F3GPP%5FSYNC/RAN2/Docs> [retrieved on 20180701]

## Description

### Field of the invention

The present invention relates to an apparatus, a method and a computer program product.

### Abbreviations

- 3GPP: 3^{rd} Generation Partnership Project
- 4G, 5G: 4^{th}, 5^{th} Generation
- 4GC, 5GC: 4G, 5G Core
- AMF: Access Management Function
- AP: Application Part
- BTS: Base Transceiver Station
- CGI: Cell Global identifier
- CP: Control Plane
- CU: Central Unit
- DU: Distributed Unit
- eNB: evolved NodeB (4G base station)
- EN: E-UTRA NR
- EN-DC: EN - Dual Connectivity
- EPC: Evolved Packet Core (4G Core)
- EPS: Evolved Packet System (4G System)
- E-UTRA: Evolved UMTS Terrestrial Radio Access
- gNB: next Generation NodeB (5G base station)
- HO: Handover
- ID: Identifier
- IE: Information Element
- L1, L2, L3: Layer 1, 2, 3 (PHY, data link layer, network layer) of OSI stack
- LTE: Long Term Evolution
- MAC: Medium Access Control
- MeNB: Master eNB
- MIB: Master Information Block
- MME: Mobility Management Entity
- MN: Master Node
- MR-DC: Multi-Radio Dual Connectivity
- NG: Next Generation
- NR: New Radio
- O&M: Operation & Maintenance
- OSI: Open Systems Interconnection
- PCI: Physical Cell Identifier
- PDCP: Packet Data Convergence Protocol
- PHY: Physical Layer (=L1)
- PLMN: Public Land Mobile Network
- RAN: Radio Access Network
- RLC: Radio Link Control
- SgNB: Secondary gNB
- S-GW: Serving Gateway
- SI: System Information
- SIB: System Information Block
- SN: Secondary Node
- TAC: Tracking Area Code
- TNL: Transport Network Layer
- TS: Technical Specification
- UE: User Equipment
- UMTS: Universal Mobile Telecommunications System
- UP: User Plane
- UPF: User Plane Function

### Background of the invention

3GPP allows two general architecture for 5G NR operation, namely Non-StandAlone (NSA) and StandAlone (SA). In NSA architecture, 5G is introduced as an overlay on top of 4G and utilizes connectivity towards the LTE core network using an LTE eNB as Master Node, while in the SA architecture the 5G core network is used and no assistance from an LTE Master Node is needed. NSA and SA are two cases of Multi-Radio Dual Connectivity (MR-DC). MR-DC is a generalization of Intra-E-UTRA Dual Connectivity (DC), where a multiple Rx/Tx capable UE may be configured to utilise resources provided by two different nodes connected via non-ideal backhaul, one providing NR access and the other one providing either E-UTRA access (NSA case) or NR access (SA case). One node acts as the MN and the other as the SN. The MN and SN are connected via a network interface and at least the MN is connected to the core network. In MR-DC, the MN is a radio access node providing the control plane connection to the core network. The SN does not have any control plane connection to the core network, but provides additional resources to the UE. Each of the MN and the SN may be a eNB (4G radio access node) or a gNB (5G radio access node).

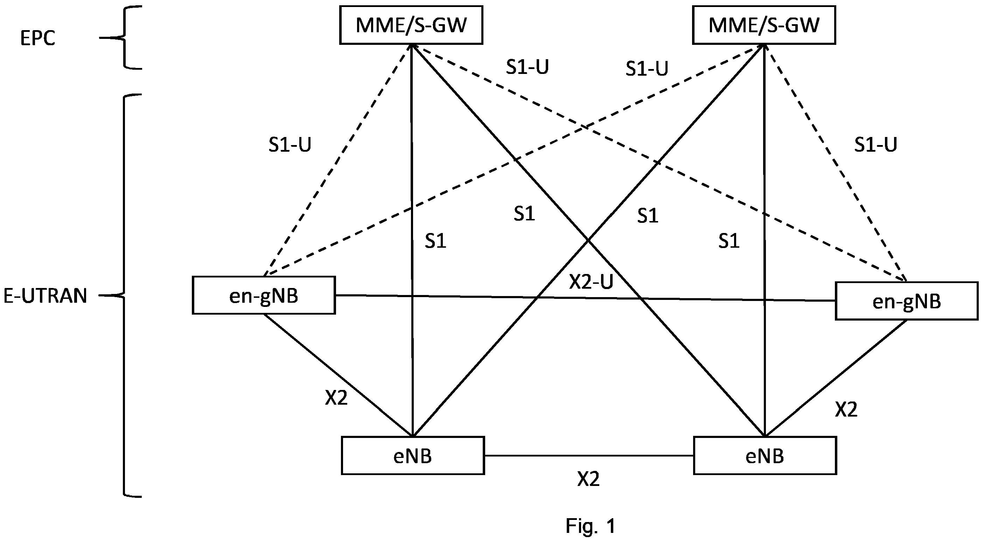

Fig. 1 shows the EN-DC overall architecture (taken from 3GPP TS 37.340) which corresponds to the NSA case. The eNBs act as MN having both a control plane and a user plane connection to the EPC (represented by MME/S-GW), while the gNBs act as SN having only a user plane connection to the EPC but not a control plane connection.

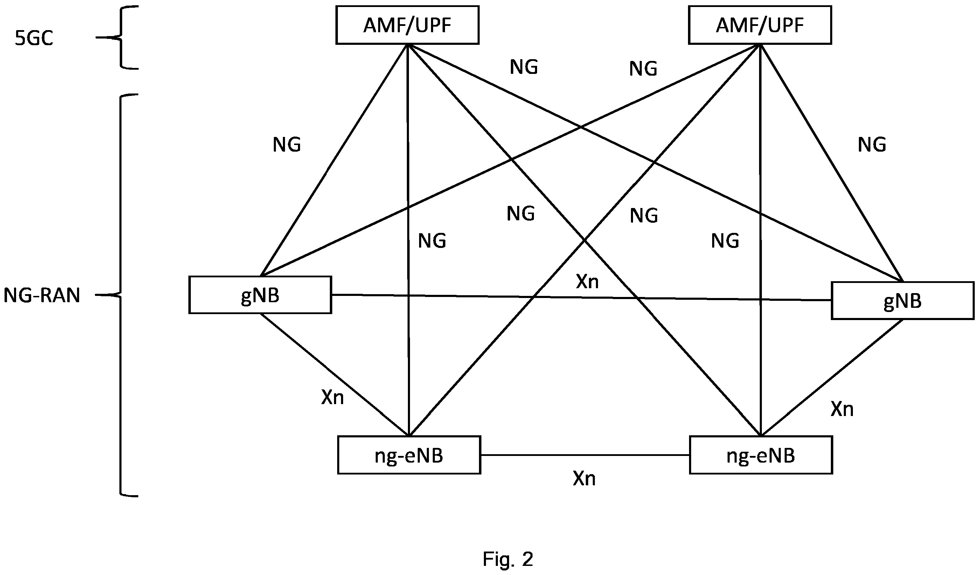

On the other hand, Fig. 2 shows a NG-RAN architecture (taken from 3GPP TS 38.401) corresponding to the SA case. The EPC is replaced by 5GC, represented by AMF/UPF. Each of the gNBs and eNBs has a control and user plane connection to the 5GC.

A 5G cell at a gNB may be configured and operate in both NSA mode and SA mode simultaneously. That is, it may serve both as an NSA and a SA cell simultaneously.

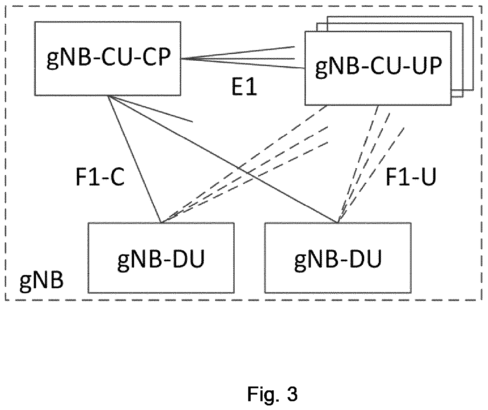

A gNB may be split into a CU and one or more DUs. The interface between these two entities is called F1 (see Fig. 3). In the DU, the lower layers of the protocol stack (e.g. PHY, MAC, RLC) are implemented, while in the CU, the upper layers of the protocol stack (e.g. PDCP) are implemented. The split may be implemented between other layers than between RLC and PDCP. As shown in Fig. 3, the CU may be split again into a control part CU-CP and one or more user parts CU-UP. The control part CU-CP is connected to each of the user parts CU-UP by E1 interface. Each DU is connected to the CU-CP and to each of the CU-UPs. The DU owns the cell configuration.

A 5G cell can operate in one of the following modes:
- Serve as an NSA 5G cell at a gNB Secondary Node (NSA cell);
- Serve as a SA 5G cell (SA cell);
- Serve both as an NSA and SA 5G cell simultaneously (SA+NSA cell).

5G cell configuration takes place at the DU node and is expected to be preconfigured via O&M prior to cell activation. This includes all the required System Information parameters, Access Control, Tracking Areas, PLMNs, etc. Within these parameters, it can be indicated whether the

5G cell is an NSA, SA, or SA+NSA cell. Likewise, the DU is in charge of informing the CU whenever a 5G cell is ready to be activated.

A gNB-CU may request cell deactivation from gNB-DU. In detail, the actions taken at gNB-DU on receiving a cell deactivation request from gNB-CU are
- Stop all SIBs transmissions.
- Take the cell off air, where L3 asks L1/L2 to delete the cell.
- Acknowledge the deactivation request to gNB-CU.

The actions taken at gNB-CU on receiving a cell deactivation confirmation from gNB-DU are
- Delete served cell information to the relevant peer nodes (e.g. eNBs, AMFs, neighboring gNBs.) This prevents future calls on this cell.

With respect to configuration and activation of cells, the work split between CU and DU is as follows:
- DU triggers addition or deletion of a cell.
- CU commands activation or deactivation of a cell. This means, the overall control of the cell lies with CU.

In detail, all of the cell configuration for lower protocol layers is dictated via preconfigured parameters via O&M in the DU. That is, the DU is in charge of indicating whether a cell is configured or not.

US2019/059045 A1 discloses a method of providing two cell barring indications via system information for UE cell selection or reselection is proposed. A first indication is a "cellBarred" indication for EPC, which indicates wither UE is barred to access EPC core network, and a second indication is a "cellBarred5GS" indication for 5GC, which indicates whether UE is barred to access 5GC core network. For E-UTRAN cell connected to both EPC and 5GC, the two indications are determined on demand, based on network preference and congestion control. For E-UTRAN cell connected to 5GC only, the value of the "cellBarred" indication is always barred. For E-UTRAN cell connected to EPC only, the base station may omit the "cellBarred5GS" field, and the existence of "cellBarred5GS" can act as an indication whether the E-UTRAN connects to 5GC.

Huawei: "(TP for NR BL CR for TS 38.473): on Cell Barred Info exchange over F1 interface", 3GPP DRAFT; R3-182116 discloses proposals relating to Cell Barred Info exchange over F1 as known in the art.

### Summary of the invention

It is an object of the present invention to improve the prior art. The invention is defined by the independent claims. Optional features are given in the dependent claims.

### Brief description of the drawings

Further details, features, objects, and advantages are apparent from the following detailed description of the preferred embodiments of the present invention which is to be taken in conjunction with the appended drawings, wherein:
Fig. 1 shows a EN-DC overall architecture (taken from 3GPP TS 37.340);
Fig. 2 shows an NG-RAN overall architecture (taken from 3GPP TS 38.401);
Fig. 3 shows a gNB internal architecture and functional split (taken from 3GPP TS 38.401);
Fig. 4 shows a message flow according to Option 1 of some example embodiments of the invention;
Fig. 5 shows parameters of a new command according to Option 1 of some example embodiments of the invention;
Fig. 6 shows a message flow according to Option 2 of some example embodiments of the invention;
Fig. 7 shows a message flow according to Option 2 of some example embodiments of the invention;
Fig. 8 shows parameters of a gNB configuration update command according to Option 2 of some example embodiments of the invention (split into Figs. 8a to 8f);
Fig. 9 shows an apparatus according to an embodiment of the invention;
Fig. 10 shows a method according to an embodiment of the invention;
Fig. 11 shows an apparatus according to an embodiment of the invention;
Fig. 12 shows a method according to an embodiment of the invention; and
Fig. 13 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In the procedures for cell handling specified in the existing 3GPP specifications, there is no explicit distinction on whether a cell is NSA, SA, or both NSA+SA. This incurs problems in some scenarios, e.g., when there is an issue encountered towards only one of the core networks (e.g., a 5G core network issue, such as an AMF going for a re-start or becoming unreachable), leading to some downtime with SA service in the cell(s) served by the AMF. Thus, given that there are no separate procedures based on operation mode, changes to the cell (e.g., deactivation or reconfiguration) cannot be triggered for an individual operation mode (technology basis). That is, there are also no means for a CU to inform a DU (who owns the cell configuration) to carry out any changes (e.g.: Stop providing SA service temporarily in the cells) with respect to a specific mode of operation (i.e. applicable only to SA or NSA).

In other words, with the current framework, there are neither means for the CU to be involved in the 5G cell configuration nor any way for the CU to request DU to change the 5G cell configuration. As a consequence, if the CU encounters an issue involving only one of the technologies (e.g., connectivity to 5G core has problems) or would benefit from reducing the number of UEs of a particular mode in accessing the cell (e.g., for load balancing or congestion reasons), it is unable to indicate it, or request such change from the DU. Thus, any changes CU triggers (e.g., deactivation of a cell) will affect both modes (SA and NSA) of the cell and, naturally, impacts all kinds of UEs served by the cell. This is not a desired condition since the issue could be possibly associated to e.g. the 5G core (AMF) only and, thus, should impact UEs experiencing SA service only but not UEs experiencing NSA service.

Of course, a corresponding consideration may be made if there is a 4G only issue (e.g. connectivity to EPC lost, MME down etc.). As another option, the issue may be in the CU itself (a malfunctioning) affecting only one of the operation modes but not the other one.

The problem may be understood better with the help of the following example scenario:
***a***. NG connection with AMF is lost => No new SA UEs can be admitted in the gNB.
***b.*** No new SA UEs can be admitted => CU decides to de-configure cell with SA functionality until the NG connection is re-established.
**c.** Currently there is no way to de-configure only SA mode of an SA+NSA cell => SA+NSA cell cannot be reconfigured to NSA-only cell.
***d.*** This means that both modes have to be de-configured, which means deactivating the cell. Hence, UEs in both SA and NSA modes are impacted and their calls are dropped. However, ideally, only SA calls should be dropped, and NSA calls should continue seamlessly.

Some example embodiments of this invention introduce a signalling mechanism between CU and DU to resolve the aforementioned issues.

I.e., some example embodiments of the invention provide a mechanism to enable the CU to notify the DU of an issue associated with (only) one of the modes of cell operation. For example, CU may request de-configuration of the particular mode of cell operation. In the above example scenario, one of the following actions may be performed:
- De-configure the mode for which CU has reported an issue.
- Change one or more access control parameters to restrict access/reduce access on one of the modes (e.g., via changes in SIB1 configuration).
- Execute Access Class Barring.

Each of these measures to reduce access to the affected operation modes may be permanent or temporary (i.e. a suspension). If the measure is temporary, the respective instruction to DU may comprise a timer. When the timer is elapsed, the DU re-instantiates the previous operation mode / barring status without involvement of the CU. If the measure is permanent, the previous operation mode / barring status may be re-instantiated by a corresponding instruction from the CU. In the time until the re-instantiation, the CU may attempt to remove the issue (or wait that the issue is removed).

This approach may be backwards compatible and may also keep whole final authority at DU in regard to configuration of 5G cell parameters, as in the existing framework. This is achieved because CU indicates and notify issues, so that the DU can change the configuration and report it via a subsequent message to the CU (e.g., once it has removed one of the modes of operation, such as changing the cell configuration from NSA+SA to SA only).

The CU may request/indicate the change in configuration based on different scenarios, such as:
- 5GC or EPC connectivity issues
   ∘ Issues may be affecting all PLMNs, or only certain ones (e.g., in case of network sharing)
- In CloudBTS architecture it might be used also for geo-redundancy purpose where connection with 5GC or 4GC is lost and only NSA or only SA in redundant gNB needs to be recovered.
- Overload control
   ∘ CU-CP may benefit from a reduction in access in one of the architectures. E.g., a change to NSA operation only would remove all the paging and SIB broadcasts on air interface, or in case of link towards 5G core being overloaded.
- Unstable situations
   ∘ CU-CP may detect issues in links towards MN or one of the core networks occurring frequently and dropping multiple users. Some threshold could be configured to determine when to apply a change in cell mode operation.

Once the GNB-CU CONFIGURATION UPDATE is supplemented with de-configuration of one of the modes in a SA+NSA cell, the actions taken at gNB-DU may be as follows (different to deactivation command received as in prior art):

### Case : NSA+SA cell reconfigured to NSA only cell

The actions taken at gNB-DU on receiving a cell reconfiguration request from gNB-CU are :
- Indicate in MIB that SIB1 is unavailable on this cell.
- Stop all SIBs transmission.
- Remove the configured 5G TAC from cell and share this information with gNB-CU in the ACK.

The actions taken at gNB-CU on receiving a cell deactivation confirmation from gNB-DU may be:
∘ Delete served cell information to the relevant peer nodes (eg AMF, neighboring gNBs,) (This prevents new SA calls, but NSA calls can continue in the cell).

In contrast to the prior art, gNB-CU does not inform any eNB on the updated served cell information. This ensures NSA service continuity in the cell.

### Case : NSA+SA cell reconfigured to SA only cell

The actions taken at gNB-DU on receiving a cell reconfiguration request from gNB-CU are :
- Remove the configured EPS TAC from cell and share this information with gNB-CU in the ACK.

The actions taken at gNB-CU on receiving a cell deactivation confirmation from gNB-DU are :
ο Delete served cell information to the relevant peer nodes (eg eNB). This prevents SgNB addition requests from being received on the deleted cell in the gNB, but SA calls can continue.

In contrast to the prior art, gNB-CU does not inform any gNB on the updated served cell information. This ensures SA service continuity in the cell.

Hereinafter, some example embodiments of the invention are described at greater detail.

Some options to implement some example embodiments of the invention are as follows:
- Option 1 - Define a new procedure to indicate/request a change in 5G cell configuration
   ∘ First, CU requests a change in cell configuration to DU via a new message.
   ∘ Second, if the request is accepted, DU performs the cell configuration change and informs on it using Served Cell Information IE (existing) included in DU CONFIGURATION UPDATE message (existing)
- Option 2 - Reuse an existing procedure to indicate/request a change in 5G cell configuration
   ∘ First, CU requests a change in cell configuration to DU via reuse of existing CU CONFIGURATION UPDATE message
   ∘ Second (optionally), DU determines whether to accept the changes, and informs CU of cells which it did not accept the change via a new IE included in CU CONFIGURATION UPDATE ACKNOWLEDGE message.
   ∘ Third, DU performs the cell configuration change and informs on it using the Served Cell Information IE (existing) included in DU CONFIGURATION UPDATE message (existing)

In case existing procedures are reused (e.g. according to Option 2), only IE introduction is needed.

Similarly, the same procedure initiated from CU can be used to indicate that the issue has been resolved and let DU bring the earlier configuration back (e.g., connectivity to AMF was restored).

The proposed new procedure names and names of lEs stated below are just non-binding examples.

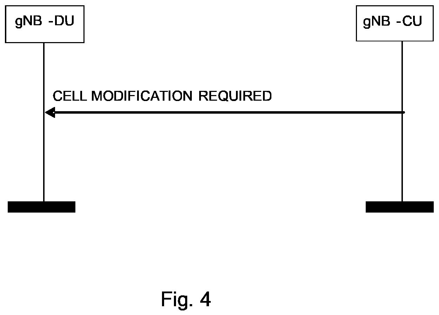

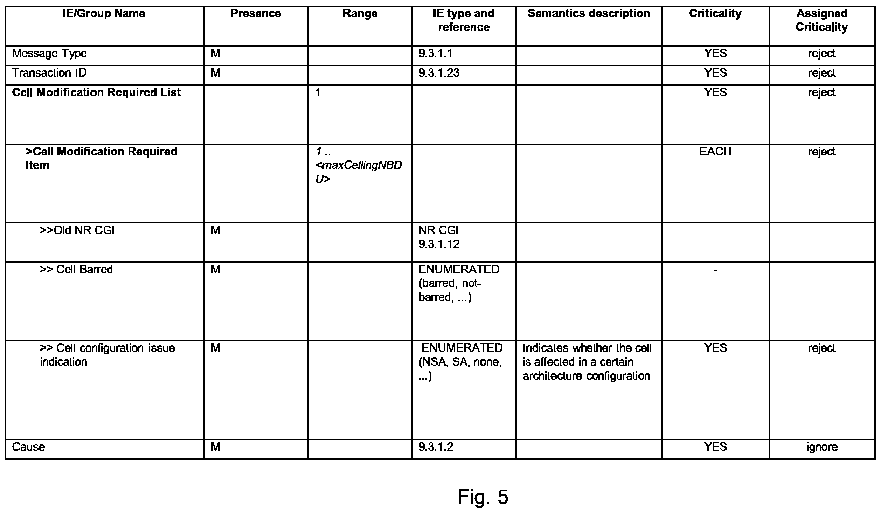

For **Option** 1, a new procedure "Cell Modification Required" may be introduced. It may be described e.g. in 3GPP TS 38.473, chapter 8.2. The purpose of the Cell Modification Required is to request a modification in the cell configuration at gNB-DU. The procedure uses non UE-associated signalling. Fig. 4 shows a message flow of successful operation. The F1AP CELL MODIFICATION REQUIRED message is initiated by the gNB-CU indicating whether a change in cell configuration is required. Fig. 5 shows an example of an parameter definition of the new command.

The message may be a Class 1 message or a Class 2 message, although a class 2 message is preferred. In 3GPP terms, a Class 1 procedure is one in which there are both a request and a response following the request. The procedure is not considered to be complete without the response message (e.g., F1 SETUP REQUEST + F1 SETUP RESPONSE messages constitute a Class 1 procedure).

In contrast, a Class 2 procedure is determined by a single message and it may/or may not trigger additional actions at the receiver. According to some example embodiments using a class 2 procedure, the CU sends the "CELL MODIFICATION REQUIRED" message. Then it is up to the DU to trigger the changes. The DU may inform the CU on the changes by an additional procedure (e.g. DU CONFIGURATION UPDATE). This way, a minimum response time is not imposed on the DU to trigger the action (usually Class 1 procedures have an expiration time in which the requesting end expects the response to be received).

However, in some example embodiments, a Class 1 procedure may be used instead. It may look like the following example:
- CU → DU: CELL MODIFICATION REQUIRED
- DU → CU: CELL MODIFICATION REQUEST RESPONSE (which indicates whether the changes are acknowledged and DU will carry them out).

The procedure may also comprise the following message:
- DU → CU: CELL MODIFICATION REQUEST FAILURE (which indicates to the CU that the request has failed and the DU will not make any changes).

For **Option 2,** the purpose of the existing gNB-CU Configuration Update command may be described as follows: The purpose of the gNB-CU Configuration Update procedure is to update application level configuration data needed for the gNB-DU and gNB-CU to interoperate correctly on the F1 interface. This procedure does not affect existing UE-related contexts, if any. The procedure uses non-UE associated signalling.

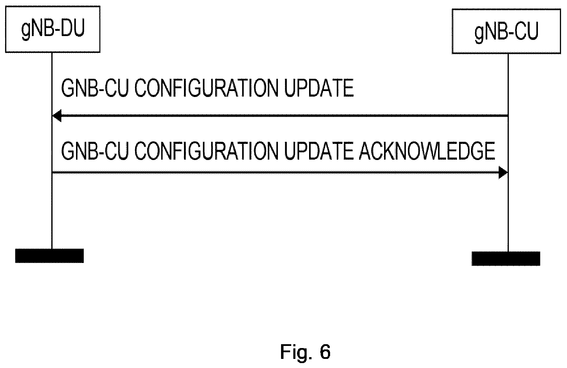

A message flow for successful operation is shown in Fig. 6. In detail, the gNB-CU initiates the procedure by sending a GNB-CU CONFIGURATION UPDATE message including the appropriate updated configuration data to the gNB-DU. The gNB-DU responds with a GNB-CU CONFIGURATION UPDATE ACKNOWLEDGE message to acknowledge that it successfully updated the configuration data. If an information element is not included in the GNB-CU CONFIGURATION UPDATE message, the gNB-DU shall interpret that the corresponding configuration data is not changed and shall continue to operate the F1-C interface with the existing related configuration data.

The updated configuration data shall be stored in the respective node and used as long as there is an operational TNL association or until any further update is performed.

If *Cells to be Activated List Item* IE is contained in the GNB-CU CONFIGURATION UPDATE message, the gNB-DU shall activate the cell indicated by *NR CGI* IE and reconfigure the physical cell identity for which the *NR PCI IE* is included.

If *Cells to be Deactivated List Item* IE is contained in the GNB-CU CONFIGURATION UPDATE message, the gNB-DU shall deactivate the cell indicated by *NR CGI* IE.

If *Cells to be Activated List Item* IE is contained in the GNB-CU CONFIGURATION UPDATE message and the indicated cells are already activated, the gNB-DU shall update the cell information received in *Cells to be Activated List Item* IE.

If the *gNB-CU System Information* IE is contained in the gNB-CU CONFIGURATION UPDATE message, the gNB-DU shall include the *Dedicated SI Delivery Needed UE List* IE in the GNB-CU CONFIGURATION UPDATE ACKNOWLEDGE message for UEs that are unable to receive system information from broadcast.

If *Dedicated SI Delivery Needed UE List* IE is contained in the GNB-CU CONFIGURATION UPDATE ACKNOWLEDGE message, the gNB-CU should take it into account when informing the UE of the updated system information via the dedicated RRC message.

If the *gNB-CU TNL Association To Add List* IE is contained in the gNB-CU CONFIGURATION UPDATE message, the gNB-DU shall, if supported, use it to establish the TNL association(s) with the gNB-CU. The gNB-DU shall report to the gNB-CU, in the gNB-CU CONFIGURATION UPDATE ACKNOWLEDGE message, the successful establishment of the TNL association(s) with the gNB-CU as follows:
- A list of TNL address(es) with which the gNB-DU successfully established the TNL association shall be included in the gNB-CU *TNL Association Setup List* IE;
- A list of TNL address(es) with which the gNB-DU failed to establish the TNL association shall be included in the *gNB-CU TNL Association Failed To Setup List* IE.

If the GNB-CU CONFIGURATION UPDATE message includes *gNB-CU TNL Association To Remove List* IE, and the *Endpoint IP address* IE and the *Port Number* IE for both TNL endpoints of the TNL association(s) are included in the *gNB-CU TNL Association To Remove List* IE, the gNB-DU shall, if supported, initiate removal of the TNL association(s) indicated by both received TNL endpoints towards the gNB-CU. If the *Endpoint IP address* IE, or the *Endpoint IP address* IE and the *Port Number* IE for one or both of the TN L endpoints is included in the *gNB-CU TNL Association To Remove List* IE, the gNB-DU shall, if supported, initiate removal of the TNL association(s) indicated by the received endpoint IP address(es).

If the *gNB-CU TNL Association To Update List* IE is contained in the gNB-CU CONFIGURATION UPDATE message the gNB-DU shall, if supported, overwrite the previously stored information for the related TNL Association(s).

If the *TNL Association usage* IE is included in the *gNB-CU TNL Association To Add List* IE or the *gNB-CU TNL Association To Update List* IE, the gNB-DU node shall, if supported, use it as described in TS 38.472 [22].

For NG-RAN, the gNB-CU shall include the *gNB-CU System Information* IE in the GNB-CU CONFIGURATION UPDATE message. The *SIB type to Be Updated List* IE shall contain the full list of SIBs to be broadcast.

If *Protected E-UTRA Resources List* IE is contained in the GNB-CU CONFIGURATION UPDATE message, the gNB-DU shall protect the corresponding resource of the cells indicated by *E-UTRA Cells List* IE for spectrum sharing between E-UTRA and NR.

If the GNB-CU CONFIGURATION UPDATE message contains the *Protected E-UTRA Resource Indication* IE, the receiving gNB-DU should forward it to lower layers and use it for cell-level resource coordination. The gNB-DU shall consider the received *Protected E-UTRA Resource Indication* IE when expressing its desired resource allocation during gNB-DU Resource Coordination procedure. The gNB-DU shall consider the received *Protected E-UTRA Resource Indication* IE content valid until reception of a new update of the IE for the same gNB-DU.

If *Available PLMN List* IE, and optionally also *Extended Available PLMN List* IE, is contained in GNB-CU CONFIGURATION UPDATE message, the gNB-DU shall overwrite the whole available PLMN list and update the corresponding system information.

If *Cells Failed to be Activated Item* IE is contained in the GNB-CU CONFIGURATION UPDATE ACKNOWLEDGE message, the gNB-CU shall consider that the indicated cells are out-of-service as defined in TS 38.401 [4].

If *Cell Modification Required List* IE is contained in the GNB-CU CONFIGURATION UPDATE message, the gNB-DU shall, if supported, trigger modifications to the cells indicated by *NR-CGI* IE, to suspend or re-activate a mode of cell operation.

The last clause hereinabove *(Cell Modification Required List)* describes the modification compared to the existing gNB-CU Configuration Update command (see 3GPP 38.473).

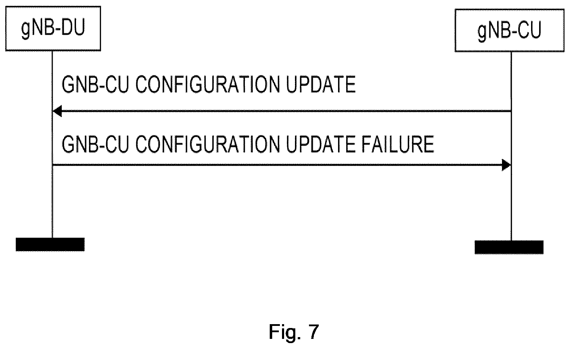

A message flow for unsuccessful operation according to Option 2 is shown in Fig. 7.

If the gNB-DU cannot accept the update, it shall respond with a GNB-CU CONFIGURATION UPDATE FAILURE message and appropriate cause value.

If the GNB-CU CONFIGURATION UPDATE FAILURE message includes the *Time To Wait* IE, the gNB-CU shall wait at least for the indicated time before reinitiating the GNB-CU CONFIGURATION UPDATE message towards the same gNB-DU.

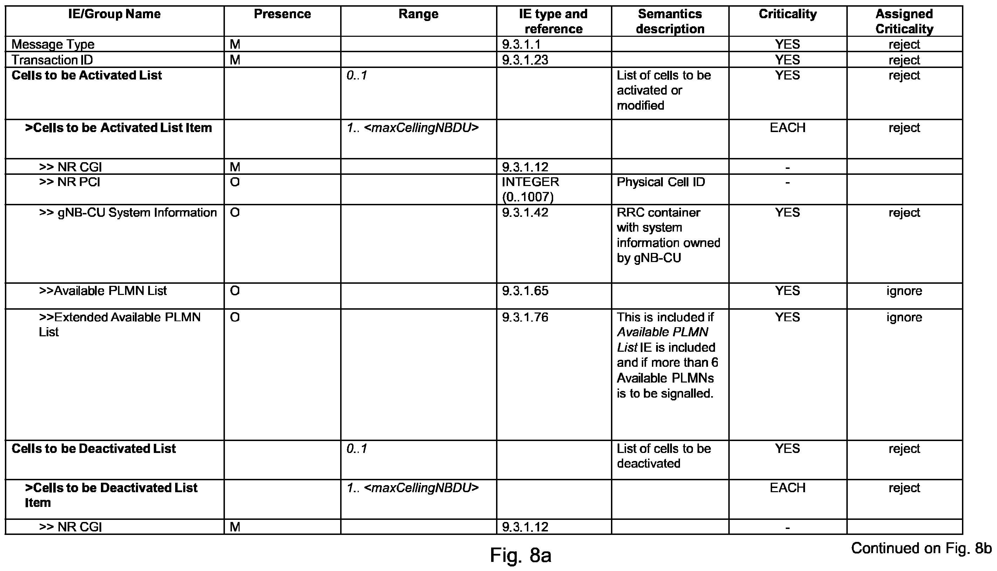

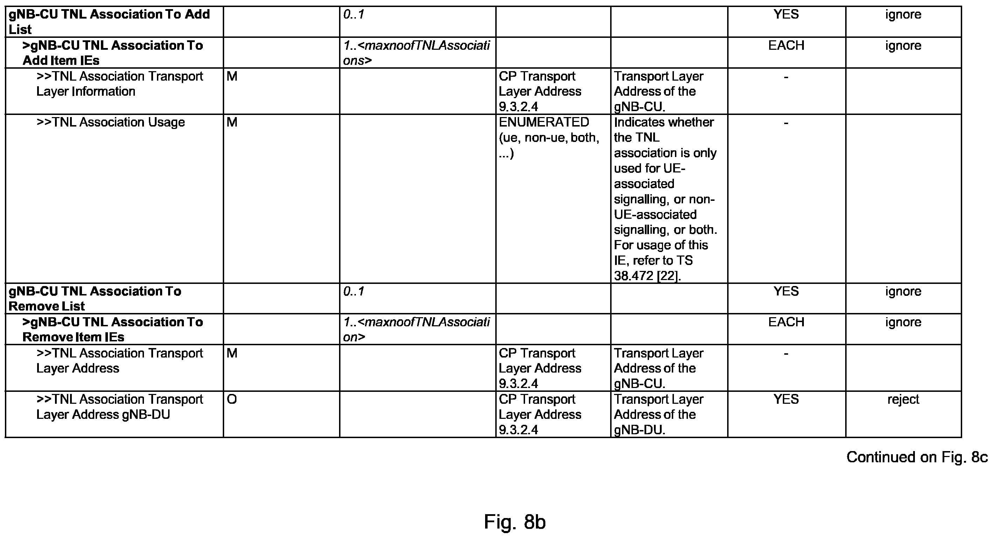

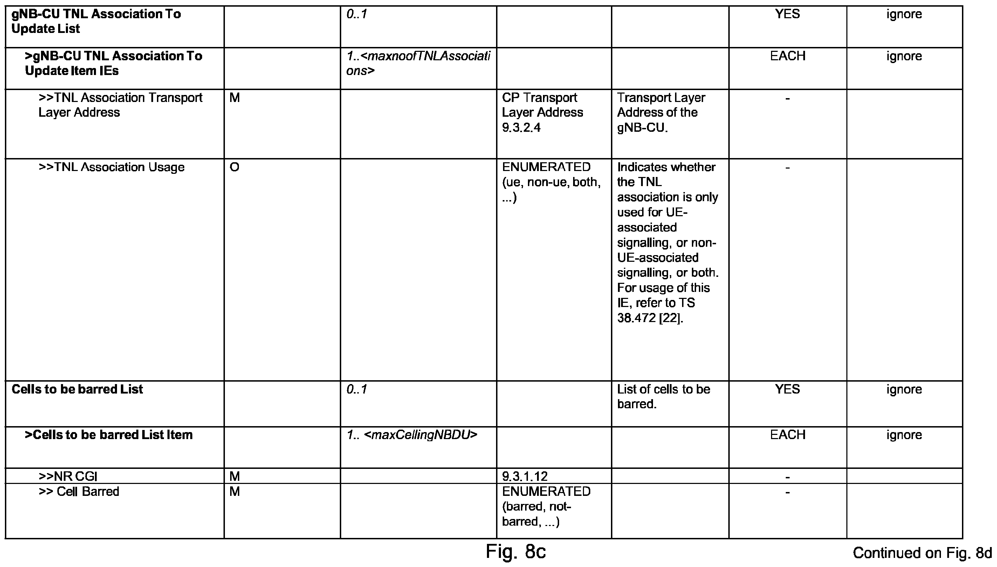

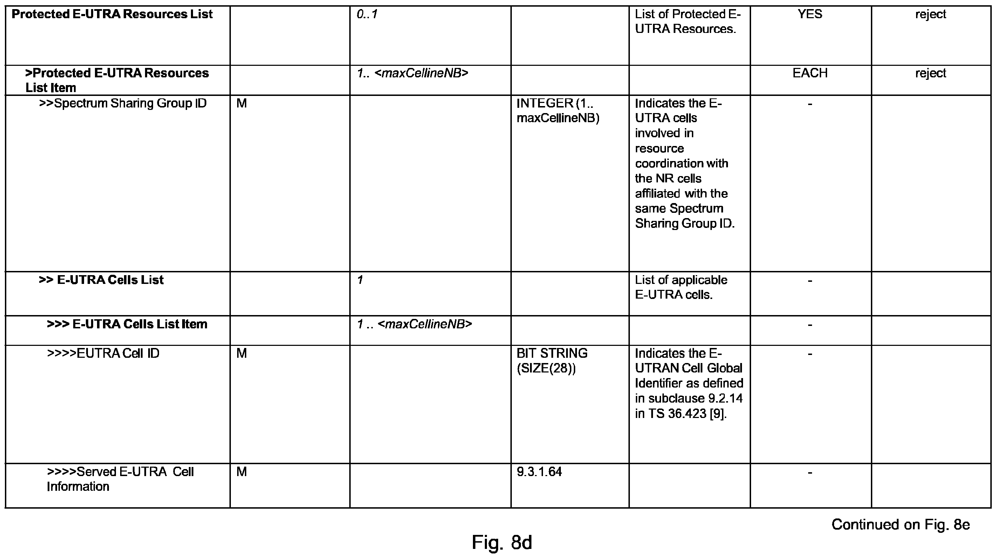

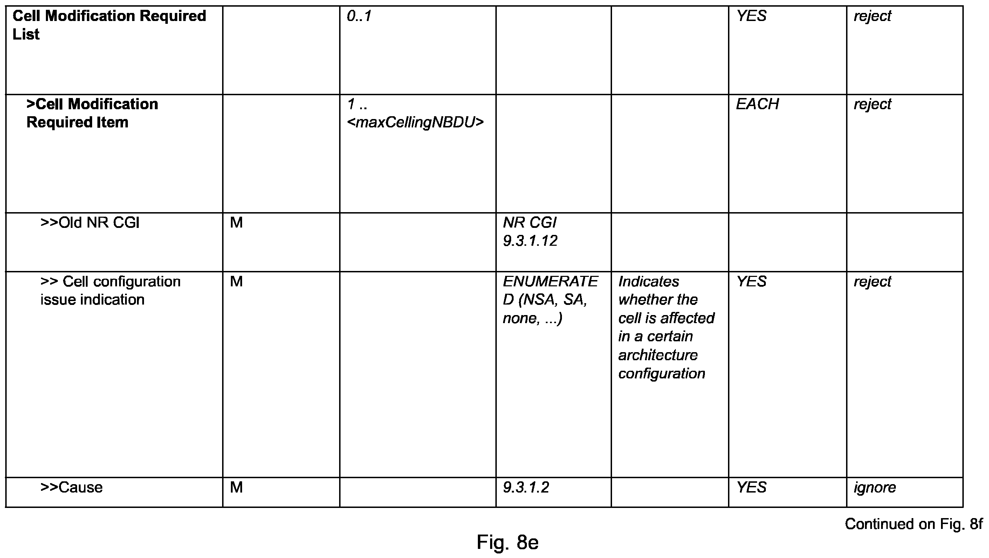

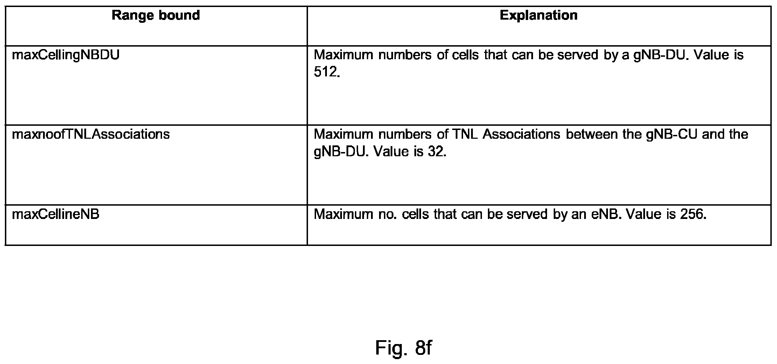

Fig. 8 shows the parameters of the gNB-CU configuration update command according to some example embodiments of the invention. Fig. 8 is split into Figs. 8a to 8f, and the newly introduced parameter Cell modification Required List is depicted in Fig. 8e. This message is sent by the gNB-CU to transfer updated information associated to an F1-C interface instance. If F1-C signalling transport is shared among several F1-C interface instances, this message may transfer updated information associated to several F1-C interface instances. The table of Fig. 8 is based on 3GPP TS 38.473.

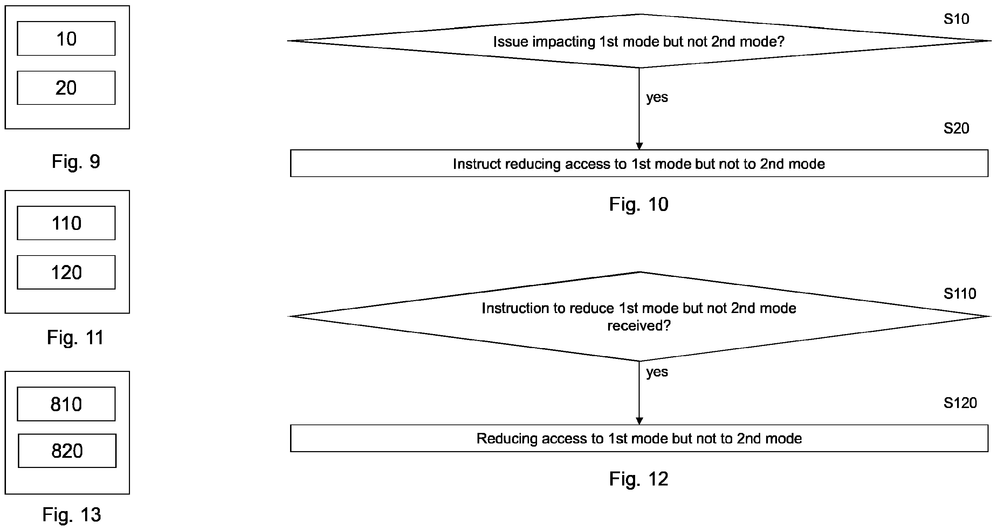

Fig. 9 shows an apparatus according to an embodiment of the invention. The apparatus may be a CU (e.g. gNB-CU) or an element thereof. Fig. 10 shows a method according to an embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises means for detecting 10 and means for instructing 20. The means for detecting 10 and means for instructing 20 may be a detecting means and instructing means, respectively. The means for detecting 10 and means for instructing 20 may be a detector and instructor, respectively. The means for detecting 10 and means for instructing 20 may be a detecting processor and instructing processor, respectively.

The means for detecting 10 detects if an issue impacts a first operation mode of a cell and the issue does not impact a second operation mode of the cell (S10). The second operation mode is different to the first operation mode. For example, the first operation mode may be SA and the second operation mode may be NSA, or the first operation mode may be NSA and the second operation mode may be SA. In general, an operation mode may be characterized by its connectivity to a core network of a certain technology such as 4G (core network = EPC) or 5G (core network = 5GC).

If the issue impacts the first operation mode and does not impact the second operation mode (S10 = "yes"), the means for instructing 20 instructs a distributed unit serving the cell to reduce an access to the cell operating in the first operation mode without reducing the access to the cell operating in the second operation mode (S20). For example, the instructing may comprise de-configuring the first mode, barring the first mode, or adapting an access control parameter to the first mode.

Fig. 11 shows an apparatus according to an embodiment of the invention. The apparatus may be a DU (e.g. gNB-DU) or an element thereof. Fig. 12 shows a method according to an embodiment of the invention. The apparatus according to Fig. 11 may perform the method of Fig. 12 but is not limited to this method. The method of Fig. 12 may be performed by the apparatus of Fig. 11 but is not limited to being performed by this apparatus.

The apparatus comprises means for monitoring 110 and means for reducing 120. The means for monitoring 110 and means for reducing 120 may be a monitoring means and reducing means, respectively. The means for monitoring 110 and means for reducing 120 may be a monitor and reducer, respectively. The means for monitoring 110 and means for reducing 120 may be a monitoring processor and reducing processor, respectively.

The means for monitoring 110 monitors if a distributed unit serving a cell receives an instruction (S110). The instruction instructs the distributed unit to reduce an access to the cell operating in a first operation mode without reducing an access to the cell operating in a second operation mode. The second operation mode is different from the first operation mode. For example, the first operation mode may be SA and the second operation mode may be NSA, or the first operation mode may be NSA and the second operation mode may be SA. In general, an operation mode may be characterized by its connectivity to a core network of a certain technology such as 4G (core network = EPC) or 5G (core network = 5GC).

If the instruction is received (S110 = yes), the means for reducing 120 reduces the access to the cell operating in the first operation mode without reducing the access to the cell operating in the second operation mode (S120). For example, the reducing may comprise de-configuring the first mode, barring the first mode, or adapting an access control parameter to the first mode.

Fig. 13 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least one of the methods according to Figs. 10 and 12 and related description.

Some example embodiments are described with respect to two modes of operation of the cell, namely NSA and SA. However, the invention is not limited to these two modes. In some example embodiments, the cell may operate in more than two modes or in two modes different from NSA and SA. For example, in an upcoming 6^{th} generation network, a cell may operate simultaneously in a 4G mode, a 5G mode, and a 6G mode, or in any two of these three operation modes. In general, an operation mode may be defined as a mode of operation having connectivity to at least a certain core network.

The instruction to reduce the access to the cell operating in one operation mode but not to the cell operating in another operating mode may be given explicitly or implicitly. In the implicit case, the CU may just inform the DU that the issue is with the one operation mode only and the DU may interpret this information as a corresponding instruction.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that example embodiments of the present invention provide, for example, a CU, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a DU, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
means for detecting (10) configured to detect if an issue impacts a first operation mode of a cell and the issue does not impact a second operation mode of the cell different to the first operation mode;
means for instructing (20) configured to instruct a distributed unit serving the cell to reduce an access to the cell operating in the first operation mode without reducing the access to the cell operating in the second operation mode if the issue impacts the first operation mode and does not impact the second operation mode, wherein the means for instructing is configured to instruct the distributed unit that the first operation mode of the cell is to be de-configured and the second operation mode of the cell is not to be de-configured; and **characterised by**
means for informing configured to inform a first peer node involved in the operation of the cell in the first operation mode of the cell that the first operation mode of the cell is de-configured without informing any second peer node involved in the operation of the cell in the second operation mode of the cell that the second operation mode of the cell was de-configured.

2. The apparatus according to claim 1, wherein the first operation mode defines operation of the cell with connectivity to a first core network of a first core technology, and the second operation mode defines operation of the cell with connectivity to a second core network of a second core technology different from the first core technology.

3. The apparatus according to claim 2, wherein the issue is at least one of a loss of connectivity to the first core network and an outage of a function of the first core network.

4. The apparatus according to any of claims 1 to 3, wherein the issue is at least one of an overload of the cell in the first operation mode and a malfunction of a central unit impacting the first operation mode but not the second operation mode, wherein the central unit provides higher layer functionality to the distributed unit.

5. The apparatus according to claim 1, further comprising
means for monitoring configured to monitor if a confirmation is received, wherein the confirmation indicates that the first operation mode of the cell is de-configured in response to the instructing;
means for prohibiting configured to prohibit the means for informing to inform the peer node that the first operation mode of the cell is de-configured if the confirmation is not received.

6. Method, comprising
detecting if an issue impacts a first operation mode of a cell and the issue does not impact a second operation mode of the cell different to the first operation mode;
instructing a distributed unit serving the cell to reduce an access to the cell operating in the first operation mode without reducing the access to the cell operating in the second operation mode if the issue impacts the first operation mode and does not impact the second operation mode, wherein the instructing comprises instructing the distributed unit that the first operation mode of the cell is to be de-configured and the second operation mode of the cell is not to be de-configured; and **characterised by**
informing a first peer node involved in the operation of the cell in the first operation mode of the cell that the first operation mode of the cell is de-configured without informing any second peer node involved in the operation of the cell in the second operation mode of the cell that the second operation mode of the cell was de-configured.

7. The method according to claim 6, wherein the first operation mode defines operation of the cell with connectivity to a first core network of a first core technology, and the second operation mode defines operation of the cell with connectivity to a second core network of a second core technology different from the first core technology.

8. The method according to claim 7, wherein the issue is at least one of a loss of connectivity to the first core network and an outage of a function of the first core network.

9. The method according to any of claims 6 to 8, wherein the issue is at least one of an overload of the cell in the first operation mode and a malfunction of a central unit impacting the first operation mode but not the second operation mode, wherein the central unit provides higher layer functionality to the distributed unit.

10. The method according to claim 6, further comprising
monitoring if a confirmation is received, wherein the confirmation indicates that the first operation mode of the cell is de-configured in response to the instructing;
prohibiting the informing of the peer node that the first operation mode of the cell is de-configured if the confirmation is not received.

11. A computer program product comprising a set of instructions which, when executed on an apparatus, is configured to cause the apparatus to carry out the method according to any of claims 6 to 10.

## Patentansprüche

1. Vorrichtung, die Folgendes umfasst
Mittel zum Detektieren (10), die dazu ausgelegt sind zu detektieren, ob ein Problem einen ersten Betriebsmodus einer Zelle beeinträchtigt und das Problem einen zweiten Betriebsmodus der Zelle, der sich vom ersten Betriebsmodus unterscheidet, nicht beeinträchtigt;
Mittel zum Anweisen (20), die dazu ausgelegt sind, eine verteilte Einheit, die die Zelle bedient, anzuweisen, einen Zugang zu der Zelle, die im ersten Betriebsmodus betrieben wird, zu reduzieren, ohne den Zugang zu der Zelle, die im zweiten Betriebsmodus betrieben wird, zu reduzieren, wenn das Problem den ersten Betriebsmodus beeinträchtigt und den zweiten Betriebsmodus nicht beeinträchtigt, wobei die Mittel zum Anweisen dazu ausgelegt sind, die verteilte Einheit anzuweisen, dass die Auslegung des ersten Betriebsmodus der Zelle aufzuheben ist und die Auslegung des zweiten Betriebsmodus der Zelle nicht aufzuheben ist; und **gekennzeichnet durch**
Mittel zum Informieren, die dazu ausgelegt sind, einen ersten Peerknoten, der in den Betrieb der Zelle im ersten Betriebsmodus der Zelle involviert ist, zu informieren, dass die Auslegung des ersten Betriebsmodus der Zelle aufgehoben ist, ohne einen zweiten Peerknoten, der in den Betrieb der Zelle im zweiten Betriebsmodus der Zelle involviert ist, zu informieren, dass die Auslegung des zweiten Betriebsmodus der Zelle aufgehoben wurde.

2. Vorrichtung nach Anspruch 1, wobei der erste Betriebsmodus einen Betrieb der Zelle mit einer Konnektivität mit einem ersten Kernnetzwerk einer ersten Kerntechnologie definiert, und der zweite Betriebsmodus einen Betrieb der Zelle mit einer Konnektivität mit einem zweiten Kernnetzwerk einer zweiten Kerntechnologie, die sich von der ersten Kerntechnologie unterscheidet, definiert.

3. Vorrichtung nach Anspruch 2, wobei das Problem eines von einem Verlust einer Konnektivität mit dem ersten Kernnetzwerk und einem Ausfall einer Funktion des ersten Kernnetzwerks ist.

4. Vorrichtung nach einem der Ansprüche 1 bis 3, wobei das Problem mindestens eines von einer Überlastung der Zelle im ersten Betriebsmodus und einer Fehlfunktion einer Zentraleinheit ist, die den ersten Betriebsmodus beeinträchtigt, nicht aber den zweiten Betriebsmodus, wobei die Zentraleinheit der verteilten Einheit eine Funktionalität einer höheren Schicht bereitstellt.

5. Vorrichtung nach Anspruch 1, die ferner Folgendes umfasst
Mittel zum Überwachen, die dazu ausgelegt sind zu überwachen, ob eine Bestätigung empfangen wird, wobei die Bestätigung anzeigt, dass die Auslegung des ersten Betriebsmodus der Zelle in Reaktion auf das Anweisen aufgehoben wurde;
Mittel zum Untersagen, die dazu ausgelegt sind, es den Mitteln zum Informieren zu untersagen, den Peerknoten zu informieren, dass die Auslegung des ersten Betriebsmodus der Zelle aufgehoben wird, wenn die Bestätigung nicht empfangen wird.

6. Verfahren, das Folgendes umfasst
Detektieren, ob ein Problem einen ersten Betriebsmodus einer Zelle beeinträchtigt und das Problem einen zweiten Betriebsmodus der Zelle, der sich vom ersten Betriebsmodus unterscheidet, nicht beeinträchtigt;
Anweisen einer verteilten Einheit, die die Zelle bedient, einen Zugang zu der Zelle, die im ersten Betriebsmodus betrieben wird, zu reduzieren, ohne den Zugang zu der Zelle, die im zweiten Betriebsmodus betrieben wird, zu reduzieren, wenn das Problem den ersten Betriebsmodus beeinträchtigt und den zweiten Betriebsmodus nicht beeinträchtigt, wobei das Anweisen das Anweisen der verteilten Einheit umfasst, dass die Auslegung des ersten Betriebsmodus der Zelle aufzuheben ist und die Auslegung des zweiten Betriebsmodus der Zelle nicht aufzuheben ist; und **gekennzeichnet durch**
Informieren eines ersten Peerknotens, der in den Betrieb der Zelle im ersten Betriebsmodus der Zelle involviert ist, dass die Auslegung des ersten Betriebsmodus der Zelle aufgehoben ist, ohne einen zweiten Peerknoten, der in den Betrieb der Zelle im zweiten Betriebsmodus der Zelle involviert ist, zu informieren, dass die Auslegung des zweiten Betriebsmodus der Zelle aufgehoben wurde.

7. Verfahren nach Anspruch 6, wobei der erste Betriebsmodus einen Betrieb der Zelle mit einer Konnektivität mit einem ersten Kernnetzwerk einer ersten Kerntechnologie definiert, und der zweite Betriebsmodus einen Betrieb der Zelle mit einer Konnektivität mit einem zweiten Kernnetzwerk einer zweiten Kerntechnologie, die sich von der ersten Kerntechnologie unterscheidet, definiert.

8. Verfahren nach Anspruch 7, wobei das Problem eines von einem Verlust einer Konnektivität mit dem ersten Kernnetzwerk und einem Ausfall einer Funktion des ersten Kernnetzwerks ist.

9. Verfahren nach einem der Ansprüche 6 bis 8, wobei das Problem mindestens eines von einer Überlastung der Zelle im ersten Betriebsmodus und einer Fehlfunktion einer Zentraleinheit ist, die den ersten Betriebsmodus beeinträchtigt, nicht aber den zweiten Betriebsmodus, wobei die Zentraleinheit der verteilten Einheit eine Funktionalität einer höheren Schicht bereitstellt.

10. Verfahren nach Anspruch 6, das ferner Folgendes umfasst
Überwachen, ob eine Bestätigung empfangen wird, wobei die Bestätigung anzeigt, dass die Auslegung des ersten Betriebsmodus der Zelle in Reaktion auf das Anweisen aufgehoben wurde;
Untersagen des Informierens des Peerknotens, dass die Auslegung des ersten Betriebsmodus der Zelle aufgehoben wird, wenn die Bestätigung nicht empfangen wird.

11. Computerprogrammprodukt, das einen Satz von Anweisungen umfasst, der, wenn er in einer Vorrichtung ausgeführt wird, dazu ausgelegt ist, die Vorrichtung zu veranlassen, das Verfahren nach einem der Ansprüche 6 bis 10 umzusetzen.

## Revendications

1. Appareil, comprenant
des moyens de détection (10) configurés pour détecter si un problème affecte un premier mode de fonctionnement d'une cellule et si le problème n'affecte pas un deuxième mode de fonctionnement de la cellule, qui est différent du premier mode de fonctionnement ;
des moyens d'instruction (20) configurés pour ordonner à une unité distribuée desservant la cellule de réduire l'accès à la cellule fonctionnant dans le premier mode de fonctionnement sans réduire l'accès à la cellule fonctionnant dans le deuxième mode de fonctionnement, si le problème affecte le premier mode de fonctionnement et qu'il n'affecte pas le deuxième mode de fonctionnement, dans lequel les moyens d'instruction sont configurés pour ordonner à l'unité distribuée de dé-configurer le premier mode de fonctionnement de la cellule et de ne pas dé-configurer le deuxième mode de fonctionnement de la cellule ; et **caractérisé par**
des moyens d'information configurés pour informer un premier noeud pair impliqué dans le fonctionnement de la cellule dans le premier mode de fonctionnement de la cellule que le premier mode de fonctionnement de la cellule est dé-configuré sans informer aucun deuxième noeud pair impliqué dans le fonctionnement de la cellule dans le deuxième mode de fonctionnement de la cellule que le deuxième mode de fonctionnement de la cellule a été dé-configuré.

2. Appareil selon la revendication 1, dans lequel le premier mode de fonctionnement définit le fonctionnement de la cellule avec une connectivité à un premier coeur de réseau d'une première technologie de base, et le deuxième mode de fonctionnement définit le fonctionnement de la cellule avec une connectivité à un deuxième coeur de réseau d'une deuxième technologie de base différente de la première technologie de base.

3. Appareil selon la revendication 2, dans lequel le problème est au moins l'une parmi une perte de connectivité au premier coeur de réseau et une panne d'une fonction du premier coeur de réseau.

4. Appareil selon l'une des revendications 1 à 3, dans lequel le problème est au moins l'un parmi une surcharge de la cellule dans le premier mode de fonctionnement et un dysfonctionnement d'une unité centrale affectant le premier mode de fonctionnement mais pas le deuxième mode de fonctionnement, dans lequel l'unité centrale fournit une fonctionnalité de couche supérieure à l'unité distribuée.

5. Appareil selon la revendication 1, comprenant en outre
des moyens de surveillance configurés pour surveiller la réception d'une confirmation, dans lequel la confirmation indique que le premier mode de fonctionnement de la cellule est dé-configuré en réponse à l'instruction ;
des moyens d'interdiction configurés pour interdire aux moyens d'information d'informer le noeud pair que le premier mode de fonctionnement de la cellule est dé-configuré si la confirmation n'est pas reçue.

6. Procédé, comprenant les étapes suivantes
détecter si un problème affecte un premier mode de fonctionnement d'une cellule et si le problème n'affecte pas un deuxième mode de fonctionnement de la cellule, qui est différent du premier mode de fonctionnement ;
ordonner à une unité distribuée desservant la cellule de réduire l'accès à la cellule fonctionnant dans le premier mode de fonctionnement sans réduire l'accès à la cellule fonctionnant dans le deuxième mode de fonctionnement, si le problème affecte le premier mode de fonctionnement et qu'il n'affecte pas le deuxième mode de fonctionnement, dans lequel l'instruction comprend l'instruction à l'unité distribuée de dé-configurer le premier mode de fonctionnement de la cellule et de ne pas dé-configurer le deuxième mode de fonctionnement de la cellule ; et **caractérisé par**
l'information d'un premier noeud pair impliqué dans le fonctionnement de la cellule dans le premier mode de fonctionnement de la cellule que le premier mode de fonctionnement de la cellule est dé-configuré sans informer aucun deuxième noeud pair impliqué dans le fonctionnement de la cellule dans le deuxième mode de fonctionnement de la cellule que le deuxième mode de fonctionnement de la cellule a été dé-configuré.

7. Procédé selon la revendication 6, dans lequel le premier mode de fonctionnement définit le fonctionnement de la cellule avec une connectivité à un premier coeur de réseau d'une première technologie de base, et le deuxième mode de fonctionnement définit le fonctionnement de la cellule avec une connectivité à un deuxième coeur de réseau d'une deuxième technologie de base différente de la première technologie de base.

8. Procédé selon la revendication 7, dans lequel le problème est au moins l'une parmi une perte de connectivité au premier coeur de réseau et une panne d'une fonction du premier coeur de réseau.

9. Procédé selon l'une des revendications 6 à 8, dans lequel le problème est au moins l'un parmi une surcharge de la cellule dans le premier mode de fonctionnement et un dysfonctionnement d'une unité centrale affectant le premier mode de fonctionnement mais pas le deuxième mode de fonctionnement, dans lequel l'unité centrale fournit une fonctionnalité de couche supérieure à l'unité distribuée.

10. Procédé selon la revendication 6, comprenant en outre les étapes suivantes
surveiller la réception d'une confirmation, dans lequel la confirmation indique que le premier mode de fonctionnement de la cellule est dé-configuré en réponse à l'instruction ;
interdire d'informer le noeud pair que le premier mode de fonctionnement de la cellule est dé-configuré si la confirmation n'est pas reçue.

11. Produit de programme informatique comprenant un jeu d'instructions qui, lorsqu'elles sont exécutées sur un appareil, sont configurées pour amener l'appareil à mettre en œuvre le procédé selon l'une des revendications 6 à 10.
